# EUROPÄISCHE PATENTSCHRIFT

(11) **EP 3 948 000 B1**
(45) Veröffentlichungstag und Bekanntmachung des Hinweises auf die Patenterteilung: **24.01.2024**
(21) Anmeldenummer: 20711048.7
(22) Anmeldetag: 05.03.2020
(51) Int. Cl.: F16D 1/08, F16D 1/04

(54) **SPANNVERBINDUNG MIT EINEM AUF EINER NABE, INSBESONDERE HOHLWELLENABSCHNITT, AUFGESTECKTEN SPANNRING MIT SCHRAUBE, INSBESONDERE SPANNSCHRAUBE**
CLAMPING CONNECTION COMPRISING A CLAMPING RING MOUNTED ON A HUB, PARTICULARLY A HOLLOW SHAFT SECTION, WITH A SCREW, PARTICULARLY A CLAMPING SCREW
ASSEMBLAGE PAR SERRAGE COMPORTANT UNE BAGUE DE SERRAGE MONTÉE SUR UN MOYEU, EN PARTICULIER PARTIE D'ARBRE CREUX, DOTÉE D'UNE VIS, EN PARTICULIER UNE VIS DE SERRAGE,

(30) Priorität: 02.04.2019 DE 102019002367
(43) Veröffentlichungstag der Anmeldung: 09.02.2022
(73) Patentinhaber: SEW-EURODRIVE GmbH & Co. KG, 76646 Bruchsal (DE)
(72) Erfinder: SCHILLINGER, Jens, 76437 Rastatt (DE)
(86) Internationale Anmeldenummer: PCT/EP2020/025112
(87) Internationale Veröffentlichungsnummer: WO 2020/200514

(56) Entgegenhaltungen:
- WO-A1-2018/086755
- CN-A- 106 640 995
- DE-A1- 3 433 635

## Beschreibung

Die Erfindung betrifft eine Spannverbindung mit einem auf einer Nabe, insbesondere Hohlwellenabschnitt, aufgesteckten Spannring mit Schraube, insbesondere Spannschraube.

Es ist allgemein bekannt, dass eine Spannverbindung eine kraftschlüssige Verbindung ist.

Aus der CN 106 640 995 A ist eine Spannverbindung bekannt.

Aus der DE 198 12 223 A1 ist eine Metallbalgkupplung bekannt.

**Aus der** DE 34 33 635 A1 **ist als** relevanter **Stand der Technik eine Kupplung bekannt.**

**Aus der** CN 106 640 995 A **ist eine Welle-Nabe-Verbindung bekannt.**

**Aus der** WO 2018/086755 A1 **ist ein Getriebemotor bekannt.**

Der Erfindung liegt daher die Aufgabe zugrunde, eine Spannverbindung mit optimierter Kraftverteilung weiterzubilden.

Erfindungsgemäß wird die Aufgabe bei der Spannverbindung nach den in Anspruch 1 angegebenen Merkmalen gelöst.

Wichtige Merkmale der Erfindung bei der Spannvorrichtung sind, dass die Spannverbindung mit einem auf einer Nabe, insbesondere Hohlwellenabschnitt, aufgesteckten Spannring mit Schraube, insbesondere Spannschraube,
wobei eine weitere Welle, insbesondere ein Vollwellenabschnitt einer weiteren Welle, in die Nabe eingesteckt ist,
wobei der Spannring einen bezogen auf die Wellenachse axial durchgehenden und in radialer Richtung durchgehenden Schlitz aufweist,
wobei im Schlitz eine Scheibe, insbesondere Lochscheibe, angeordnet ist, durch welche die Schraube hindurchragt,
wobei die Scheibe in einen Axialschlitz der Nabe hineinragt,
wobei ein Sicherungsring zwischen Nabe und Spannring angeordnet ist, insbesondere zur axialen Sicherung des Spannrings an der Nabe.

Von Vorteil ist dabei, dass der Schlitz mittels der Scheibe an derjenigen Umfangsposition festlegbar ist, welche durch die in den Axialschlitz hineinragende Scheibe bestimmt ist. Denn die Scheibe ermöglicht in Zusammenwirkung mit dem Axialschlitz eine axiale Sicherung und der Sicherungsring eine in Umfangsrichtung wirkende Verdrehsicherung. Somit ist die am Umfang vorgesehene Kraftverteilung optimiert vorsehbar, indem bei der Montage die vorgesehene Positionierung definiert erzeugbar ist. Allerdings muss hierfür an der Innenseite des Spannrings und an der Außenseite der Nabe jeweils eine Ringnut zur Aufnahme des Sicherungsrings vorgesehen werden.

Bei einer vorteilhaften Ausgestaltung weist die Nabe zumindest einen in radialer Richtung durchgehenden Axialschlitz auf,
insbesondere wobei der Axialschlitz in axialer Richtung nicht durchgehend und in Umfangsrichtung ebenfalls nicht durchgehend ausgeführt ist. Von Vorteil ist dabei, dass die Nabe beim Spannen elastischer auslenkbar ist als ohne Axialschlitz. Durch den Axialschlitz wird aber eine besondere Kraftverteilung am Umfang erzeugt. Die Positionierung in Umfangsrichtung ist somit wichtig zur Erreichung der vorgesehenen Kraftverteilung.

Bei einer vorteilhaften Ausgestaltung ist die Schraube tangential gerichtet, insbesondere bezogen auf die Wellenachse. Von Vorteil ist dabei, dass der Spannring in einfacher Weise auf die Welle aufschrumpfbar ist. Außerdem ist eine in Umfangsrichtung vorgesehene Verteilung der Spannkraft erreichbar.

**Erfindungsgemäß** ist der Axialschlitz der Nabe zur Umgebung hin offen ausgeführt, insbesondere also in die Umgebung mündet. Von Vorteil ist dabei, dass die Nabe elastisch verformbar ist, wobei eine vorgesehene Kraftverteilung am Umfang erzielbar ist.

Bei einer vorteilhaften Ausgestaltung ist die Dicke der Scheibe kleiner als die in tangentialer Richtung gemessene Breite des Axialschlitzes der Nabe. Von Vorteil ist dabei, dass die Scheibe formschlüssig in der Vertiefung gesichert ist, insbesondere in axialer Richtung.

Bei einer vorteilhaften Ausgestaltung ragt der Sicherungsring teilweise in eine am Spannring, insbesondere an der der Nabe zugewandten Innenseite des Spannrings, eingebrachte Ringnut und teilweise in eine an der Nabe eingebrachte Ringnut hinein. Von Vorteil ist dabei, dass eine in axialer Richtung formschlüssige Sicherung bewirkbar ist und somit der Spannring an der vorgesehenen axialen Position haltbar ist.

Bei einer vorteilhaften Ausgestaltung ist der Sicherungsring insbesondere axial beabstandet von dem in den Axialschlitz hineinragenden Bereich der Scheibe. Von Vorteil ist dabei, dass die Verdrehsicherung separiert ist von der Axialsicherung. Somit ist das jeweilige Spiel unabhängig voneinander bestimmbar.

**Erfindungsgemäß** weist die Nabe einen weiteren Axialschlitz auf, welcher in Umfangrichtung beabstandet ist vom ersten Axialschlitz,
wobei der Sicherungsring eine nach radial innen hervorragenden Bereich aufweist, welcher in den weiteren Axialschlitz zumindest teilweise hineinragt, insbesondere zur Verdrehsicherung des Sicherungsrings selbst. Von Vorteil ist dabei, dass über die Kraftverteilung hinaus auch die Massenverteilung an der mit der Nabe mitdrehenden Spannverbindung wohldefiniert ist.

Wichtige Merkmale bei dem Getriebemotor mit Adapter mit einer vorgenannten Spannverbindung sind, dass die Nabe eine Adapterwelle des Adapters ist und die weitere Welle eine Rotorwelle eines Elektromotors des Getriebemotors ist,
wobei die Adapterwelle mittels eines in einem Gehäuseteil des Adapters aufgenommenen Lagers drehbar gelagert ist.

Von Vorteil ist dabei, dass eine Motorwelle mit einer Adapterwelle verbindbar ist, wobei eine vorgesehene Kraftverteilung am Umfang erreichbar ist.

Bei einer vorteilhaften Ausgestaltung ist die Adapterwelle drehfest mit einer eintreibenden Welle eines Getriebes verbunden. Von Vorteil ist dabei, dass ein hohes Drehmoment effektiv übertragbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

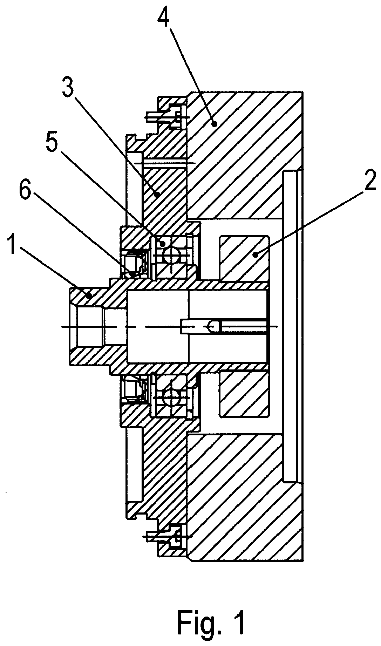

In der Figur 1 ist ein zwischen einem Elektromotor und einem Getriebe vorsehbarer Adapter im Querschnitt dargestellt, welcher eine als kraftschlüssige Welle-Nabe-Verbindung ausgeführte Spannverbindung umfasst.

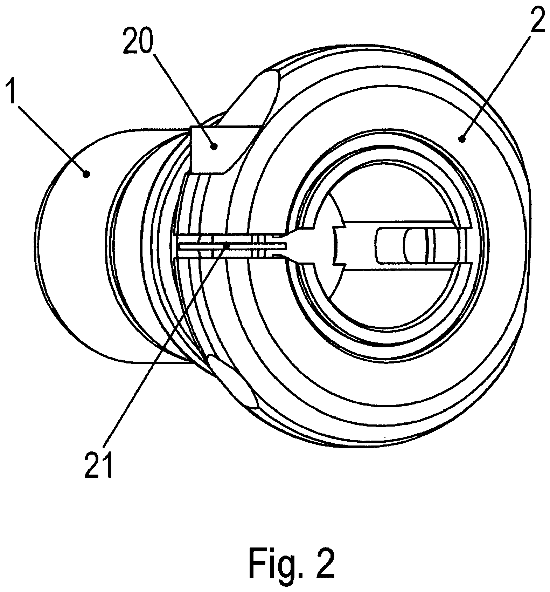

In der Figur 2 ist die Spannverbindung in Schrägansicht dargestellt.

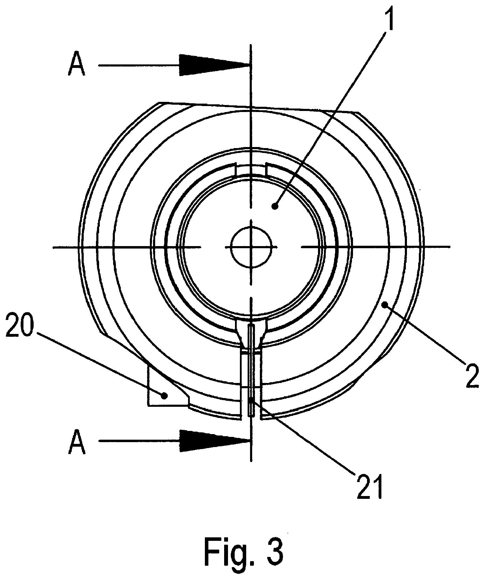

In der Figur 3 ist eine Draufsicht auf die Spannverbindung dargestellt.

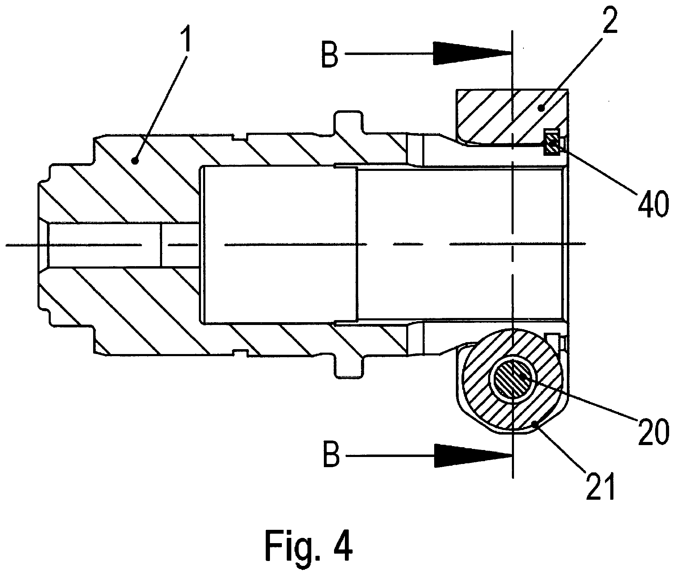

In der Figur 4 ist ein Längsschnitt durch die Spannverbindung dargestellt.

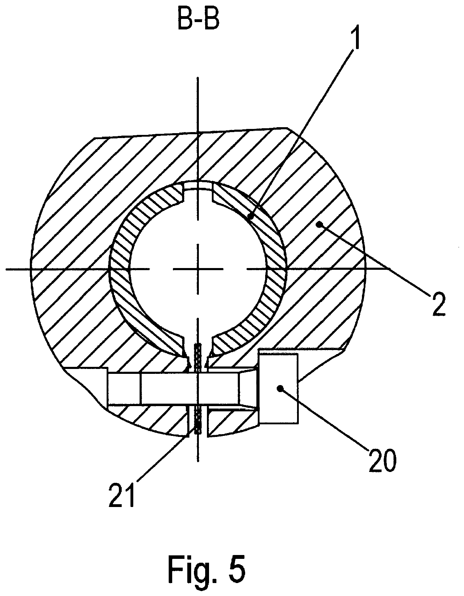

In der Figur 5 ist ein Querschnitt durch die Spannverbindung dargestellt.

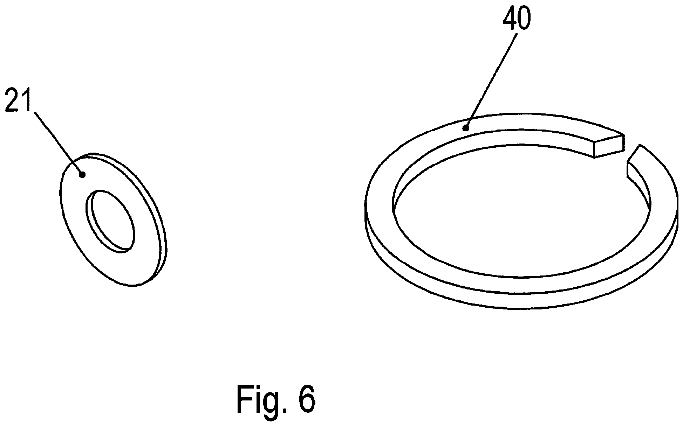

In der Figur 6 ist eine Scheibe 21 und ein Sicherungsring 40 in Schrägansicht dargestellt.

Wie in den Figuren dargestellt, ist auf einen Hohlwellenabschnitt der den Hohlwellenabschnitt 1 aufweisenden Welle ein Spannring 2 aufgesteckt, welcher mittels einer zur Wellenachse tangential ausgerichteten Schraube 20 eine in den Hohlwellenabschnitt eingesteckte, in den Figuren nicht dargestellte Vollwelle kraftschlüssig mit dem Hohlwellenabschnitt 1 verbindet.

Die den Hohlwellenabschnitt 1 aufweisenden Welle ist auch als Nabe ausführbar oder bezeichenbar.

Die den Hohlwellenabschnitt 1 aufweisenden Welle ist mittels eines in einem ersten Gehäuseteil 3 aufgenommenen Lager 5 drehbar gelagert. Außerdem ist auch ein Wellendichtring 6 im ersten Gehäuseteil 3 aufgenommen, wobei der Wellendichtring 6 auf der äußeren Oberfläche der den Hohlwellenabschnitt 1 aufweisenden Welle läuft.

Das erste Gehäuseteil 3 ist als Adaptergehäuse ausführbar und verbindbar mit einem zweiten vorzugsweise mehrstückig ausgeführten Gehäuseteil, welches diejenigen Lager aufnimmt, mittels derer die in den Figuren nicht dargestellte Vollwelle drehbar gelagert ist.

Der Spannring 2 weist an seinem Umfang einen axial durch den Spannring 2 durchgehenden und in radialer Richtung durch den Spannring 2 durchgehenden Schlitz auf.

Die Schraube 20 ragt durch eine tangential gerichtete Ausnehmung des Spannrings 2 hindurch sowie durch den Schlitz und ist mit ihrem Gewindebereich in eine Gewindebohrung des Spannrings 2 eingeschraubt. Der Schlitz ist zwischen der Gewindebohrung und der Ausnehmung angeordnet.

Im Schlitz ist eine Scheibe 21, insbesondere Lochringscheibe, angeordnet, durch deren mittig in ihr angeordnetes Loch die Schraube 20 ebenfalls hindurchragt.

Bei der Montage wird zuerst die Scheibe 21 in den Schlitz eingeführt und dann die Schraube 20 durch die Ausnehmung und durch die Scheibe 21 durchgeschoben und dann in die Gewindebohrung eingeschraubt.

Die Scheibe 21 ist derart weit radial ausgedehnt, dass der von ihr überdeckte auf die Wellenachse bezogene Radialabstandsbereich nach radial innen überlappt mit dem vom Spannring 2 überdeckten Radialabstandsbereich. Somit ragt die Scheibe 21 nach radial innen aus dem vom Spannring 2 überdeckten Bereich hervor.

Der Hohlwellenabschnitt weist einen Axialschlitz auf, welcher radial durchgehend ist und axial sich bis zum Rand des Hohlwellenabschnitts erstreckt und somit in die Umgebung mündet.

Dabei ragt die Scheibe 21 in den Axialschlitz der Nabe, also des Hohlwellenabschnitts, hinein, die am äußeren Umfang des Hohlwellenabschnitts eingearbeitet ist.

Dieser Axialschlitz ist an einer Umfangsstelle ausgeführt. Ein weiterer Axialschlitz ist 180° in Umfangsrichtung beabstandet ebenfalls am Hohlwellenabschnitt ausgeführt. Somit ist der Hohlwellenabschnitt schon mit einer geringen Schrumpfkraft oder Spannkraft auf die Vollwelle spannbar, insbesondere aufschrumpfbar.

Der Axialschlitz weist in Umfangsrichtung oder genauer gesagt in tangentialer Richtung eine Breite auf, die größer ist als die entsprechend gemessene Breite der Scheibe 21.

Mittels der in den Axialschlitz der Nabe hineinragenden Scheibe 21 ist also eine formschlüssige Sicherung in Umfangsrichtung erreicht, also eine Verdrehsicherung.

Somit ist der Spannring 2 durch die Scheibe 20 in Zusammenwirkung mit dem Axialschlitz der Nabe gegen Verdrehen in Umfangsrichtung gesichert.

Mittels eines Sicherungsrings 40 ist eine Axialsicherung des Spannrings 2 bewirkt.

Hierzu ist eine in Umfangsrichtung an der Innenseite des Spannrings umlaufende Ringnut in den Spannring 2 eingearbeitet, in welche der Sicherungsring 40 bei Montage eingelegt wird. Außerdem ist eine in Umfangsrichtung umlaufende Ringnut am radial äußeren Umfang des Hohlwellenabschnitts, also der Nabe, eingearbeitet, in welche der Sicherungsring 40 teilweise hineinragt, weil eine Formschräge im Bereich der Nutwand der Ringnut des Hohlwellenabschnitts beim Aufstecken des Spannrings 2 auf den Hohlwellenabschnitt 1 den Spannring 40 in die Ringnut des Spannrings 2 radial aufweitend hineindrückt, bis der Sicherungsring 40 sich zumindest teilweise in die Ringnut des Hohlwellenabschnitts hineinentspannt.

Der Axialschlitz und der weitere Axialschlitz sind zu einem einzigen axialen Endbereich des Hohlwellenabschnitts zur Umgebung hin offen. Beide sind also nicht axial vollständig durchgehend ausgeführt.

Auf diese Weise ist mittels der Scheibe 21 gesichert, dass der Axialschlitz und der Schlitz des Spannrings 2 an derselben Umfangsstelle sich befinden.

Der Sicherungsring 40 ist bevorzugt axial zwischen der Scheibe 21 und dem axialen Endbereich des Hohlwellenabschnitts 1 angeordnet.

Somit ist an dem größten Radialabstand der in den Hohlwellenabschnitt eingearbeiteten Ringnut ist der in axialer Richtung von der Scheibe überdeckte Axialbereich beabstandet von dem von dieser Ringnut in axialer Richtung überdeckten Axialbereich.

Der von dem Sicherungsring 40 überdeckte Radialabstandsbereich überlappt mit dem von der Scheibe 21 überdeckten Radialabstandsbereich.

Der Sicherungsring weist vorzugsweise einen rechteckförmigen Ringquerschnitt auf und ist als Rotationskörper ausgeführt, wobei er an einer Umfangsstelle unterbrochen ausgeführt ist. Somit ist er elastisch leicht verformbar.

Bei der Montage wird er ein wenig zusammengedrückt und dann in die Ringnut des Spannrings 2 entspannt. Diese Ringnut ist jedoch derart radial erstreckt, dass beim Einschieben des Hohlwellenabschnitts 1 in den Spannring 2, also beim Aufstecken des Spannrings 2 auf den Hohlwellenabschnitt 1 der Sicherungsring 40 aufgeweitet wird in die Ringnut des Spannrings 2 hinein. Diese Ringnut ist also entsprechend radial weit aufgedehnt ausgeführt.

Zur Montage ist außerdem vorteilhaft, wenn der Spannring 2 zuerst auf den Hohlwellenabschnitt aufgesteckt und danach die Scheibe 21 in den Schlitz derart eingelegt wird, dass sie in den Axialschlitz des Hohlwellenabschnitts hineinragt und danach die Schraube 20 tangential durch die Ausnehmung und die Scheibe 21 hindurchgeführt wird und danach in die Gewindebohrung eingeschraubt wird.

Der Schraubenkopf der Schraube 21 drückt auf einen am Spannring 2 ausgebildeten Absatz, so dass der Spannring 2 derart verengt wird, dass die tangentiale Breite des Schlitzes abnimmt und die Spannkraft entsprechend zunimmt.

Die Scheibe 21 weist zur Schraube 20 nur ein geringes Spiel auf, insbesondere welches kleiner ist als das im Axialschlitz, in Umfangsrichtung zum Hohlwellenabschnitt bestehende Spiel.

Außerdem ist die Scheibe 21 im Schlitz des Spannrings 2 spielbehaftet angeordnet, insbesondere also im Schlitz in tangentialer Richtung mit Spiel angeordnet ist.

Bei weiteren erfindungsgemäßen Ausführungsbeispielen wird die Scheibe 21 im Schlitz beim Einschrauben der Schraube 20 in die Gewindebohrung vom Spannring 2 eingeklemmt, insbesondere so, dass also das Spiel verschwindet. Die tangential gemessene Breite der Scheibe ist entsprechend ausgeführt.

Auf diese Weise ist die Spannkraft, also Klemmkraft, auf einen maximalen Betrag begrenzbar.

Außerdem ist die Schraube 20 auf diese Weise gegen Überlastung schützbar, da bei Verschwinden des Spiels das notwendige Anzugsmoment der Schraube plötzlich stark ansteigt und somit das Verschwinden des Spiels deutlich und einfach erkennbar ist und/oder bei Verwendung eines Drehmomentschlüssels kein weiteres Anziehen der Schraube erfolgen kann.

Die Wellenachse ist die Drehachse der Welle. Die radiale, axiale und Umfangs-Richtung sind auf diese Wellenachse bezogen.

### Bezugszeichenliste

1 Hohlwellenabschnitt
2 Spannring
3 Gehäuseteil
4 Gehäuseteil
5 Lager
6 Wellendichtring
20 Schraube
21 Scheibe, insbesondere Lochringscheibe
40 Sicherungsring

## Patentansprüche

1. Spannverbindung mit einem auf einer Nabe (1), insbesondere Hohlwellenabschnitt, aufgesteckten Spannring (2) mit Schraube (20), insbesondere Spannschraube,
wobei eine weitere Welle, insbesondere ein Vollwellenabschnitt einer weiteren Welle, in die Nabe eingesteckt ist,
wobei der Spannring einen bezogen auf die Wellenachse axial durchgehenden und in radialer Richtung durchgehenden Schlitz aufweist,
**wobei** im Schlitz eine Scheibe (21), insbesondere Lochscheibe, angeordnet ist, durch welche die Schraube hindurchragt,
wobei die Scheibe in einen Axialschlitz der Nabe hineinragt,
**dadurch gekennzeichnet, dass**
ein Sicherungsring (40) zwischen Nabe und Spannring angeordnet ist, insbesondere zur axialen Sicherung des Spannrings an der Nabe,
**wobei der Axialschlitz der Nabe zur Umgebung hin offen ausgeführt ist, insbesondere also in die Umgebung mündet,**
**wobei die Nabe einen weiteren Axialschlitz aufweist, welcher in Umfangrichtung beabstandet ist vom ersten Axialschlitz,**
**wobei der Sicherungsring** einen **nach radial innen hervorragenden Bereich aufweist, welcher in den weiteren Axialschlitz zumindest teilweise hineinragt, insbesondere zur Verdrehsicherung des Sicherungsrings selbst.**

2. Spannverbindung nach Anspruch 1,
**dadurch gekennzeichnet, dass**
der Axialschlitz in axialer Richtung nicht durchgehend und in Umfangsrichtung ebenfalls nicht durchgehend ausgeführt ist.

3. Spannverbindung nach einem der vorangegangenen Ansprüche,
**dadurch gekennzeichnet, dass**
die Schraube tangential gerichtet ist, insbesondere bezogen auf die Wellenachse.

4. Spannverbindung nach einem der vorangegangenen Ansprüche,
**dadurch gekennzeichnet, dass**
die Dicke der Scheibe **kleiner** ist als die in tangentialer Richtung gemessene Breite des Axialschlitzes der Nabe.

5. Spannverbindung nach einem der vorangegangenen Ansprüche,
**dadurch gekennzeichnet, dass**
der Sicherungsring teilweise in eine am Spannring, insbesondere an der der Nabe zugewandten Innenseite des Spannrings, eingebrachte Ringnut und teilweise in eine an der Nabe eingebrachte Ringnut hineinragt.

6. Spannverbindung nach einem der vorangegangenen Ansprüche,
**dadurch gekennzeichnet, dass**
der Sicherungsring insbesondere axial beabstandet ist von dem in den Axialschlitz hineinragenden Bereich der Scheibe.

7. Getriebemotor mit Adapter mit einer Spannverbindung nach einem der vorangegangenen Ansprüche,
wobei die Nabe eine Adapterwelle des Adapters ist und die weitere Welle eine Rotorwelle eines Elektromotors des Getriebemotors ist,
**dadurch gekennzeichnet, dass**
die Adapterwelle mittels eines in einem Gehäuseteil des Adapters aufgenommenen Lagers drehbar gelagert ist.

8. Getriebemotor nach einem der vorangegangenen Ansprüche,
**dadurch gekennzeichnet, dass**
die Adapterwelle drehfest mit einer eintreibenden Welle eines Getriebes verbunden ist.

## Claims

1. A clamping connection having a clamping ring (2), mounted on a hub (1), in particular a hollow shaft portion, with a screw (20), in particular a clamping screw,
wherein a further shaft, in particular a solid shaft portion of a further shaft, is inserted into the hub,
wherein the clamping ring has a slot which, related to the shaft axis, is axially through-passing and through-passing in a radial direction,
wherein in the slot there is arranged a disc (21), in particular an apertured disc, through which there projects the screw,
wherein the disc projects into an axial slot of the hub,
**characterised in that**
a retaining ring (40) is arranged between hub and clamping ring, in particular for axial securing of the clamping ring at the hub,
wherein the axial slot of the hub is open towards the surroundings, in particular therefore issues to the surroundings,
wherein the hub has a further axial slot which is spaced apart from the first axial slot in a circumferential direction,
wherein the retaining ring has a radially inwards projecting region which projects at least partially into the further axial slot, in particular for anti-twist protection of the retaining ring itself.

2. A clamping connection according to claim 1,
**characterised in that**
the axial slot is not through-passing in an axial direction and likewise is not through-passing in a circumferential direction.

3. A clamping connection according to any one of the preceding claims,
**characterised in that**
the screw is directed tangentially, in particular related to the shaft axis.

4. A clamping connection according to any one of the preceding claims,
**characterised in that**
the thickness of the disc is less than the width, measured in a tangential direction, of the axial slot of the hub.

5. A clamping connection according to any one of the preceding claims,
**characterised in that**
the retaining ring projects partially into an annular groove made at the clamping ring, in particular at the clamping-ring inner side facing the hub, and partially into an annular groove made at the hub.

6. A clamping connection according to any one of the preceding claims,
**characterised in that**
the retaining ring is in particular axially spaced apart from the disc region projecting into the axial slot.

7. A geared motor with adaptor having a clamping connection according to any one of the preceding claims,
wherein the hub is an adaptor shaft of the adaptor and the further shaft is a rotor shaft of an electric motor of the geared motor,
**characterised in that**
the adaptor shaft is rotatably mounted by means of a bearing received in a housing part of the adaptor.

8. A geared motor according to any one of the preceding claims,
**characterised in that**
the adaptor shaft is connected to an input shaft of a gear unit in a rotationally-fixed manner.

## Revendications

1. Liaison par serrage équipée d'une bague de serrage (2) emboîtée sur un moyeu (1), en particulier sur un tronçon d'arbre creux et munie d'une vis (20), notamment d'une vis de serrage,
sachant qu'un arbre supplémentaire, en particulier un tronçon d'un arbre plein supplémentaire, est emboîté dans ledit moyeu,
ladite bague de serrage comportant une fente axialement ininterrompue par rapport à l'axe de l'arbre, et ininterrompue dans la direction radiale,
sachant qu'un disque (21), en particulier un disque perforé intégralement traversé par la vis, est logé dans ladite fente,
lequel disque pénètre dans une fente axiale dudit moyeu,
**caractérisée par le fait**
**qu'**une bague d'arrêt (40) est interposée entre le moyeu et la bague de serrage, notamment en vue d'arrêter axialement ladite bague de serrage sur ledit moyeu,
sachant que la fente axiale dudit moyeu est de réalisation ouverte vers l'espace environnant, c'est-à-dire qu'elle débouche notamment dans ledit espace environnant, ledit moyeu étant pourvu d'une fente axiale additionnelle située à distance de la première fente axiale dans la direction du pourtour,
ladite bague d'arrêt étant dotée d'une région faisant radialement saillie vers l'intérieur et pénétrant dans ladite fente axiale additionnelle, au moins en partie, notamment en vue du blocage rotatoire de la bague d'arrêt proprement dite.

2. Liaison par serrage selon la revendication 1,
**caractérisée par le fait que**
la fente axiale n'est pas de réalisation ininterrompue dans la direction axiale, et également pas ininterrompue dans la direction du pourtour.

3. Liaison par serrage selon l'une des revendications précédentes,
**caractérisée par le fait que**
la vis est orientée tangentiellement, par rapport à l'axe de l'arbre en particulier.

4. Liaison par serrage selon l'une des revendications précédentes,
**caractérisée par le fait que**
l'épaisseur du disque est inférieure à la largeur de la fente axiale du moyeu, mesurée dans la direction tangentielle.

5. Liaison par serrage selon l'une des revendications précédentes,
**caractérisée par le fait que**
la bague d'arrêt pénètre partiellement dans une rainure annulaire pratiquée dans la bague de serrage, notamment dans la face intérieure de ladite bague de serrage qui pointe vers le moyeu, et partiellement dans une rainure annulaire pratiquée dans ledit moyeu.

6. Liaison par serrage selon l'une des revendications précédentes,
**caractérisée par le fait que**
la bague d'arrêt se trouve, en particulier dans le sens axial, à distance de la région du disque qui pénètre dans la fente axiale.

7. Motoréducteur comprenant un adaptateur et une liaison par serrage conforme à l'une des revendications précédentes,
le moyeu étant un arbre dudit adaptateur, et l'arbre supplémentaire étant un arbre rotorique d'un moteur électrique dudit motoréducteur,
**caractérisé par le fait que**
l'arbre de l'adaptateur est monté à rotation au moyen d'un palier logé dans une partie de carter dudit adaptateur.

8. Motoréducteur selon l'une des revendications précédentes,
**caractérisé par le fait que**
l'arbre de l'adaptateur est relié, avec verrouillage rotatif, à un arbre d'entrée d'une transmission.
